# EUROPEAN PATENT APPLICATION

(11) **EP 1 953 862 A1**
(43) Date of publication of application: **06.08.2008**
(21) Application number: 06811492.5
(22) Date of filing: 10.10.2006
(51) Int. Cl.: H01Q 1/24, G06K 19/07, G06K 19/077, H01Q 7/08, H04B 5/02

(54) **COIL ANTENNA AND PORTABLE ELECTRONIC APPARATUS**

(30) Priority: 22.11.2005 JP 2005337216
(71) Applicant: MURATA MANUFACTURING CO., LTD., Nagaokakyo-shi, Kyoto 617-8555 (JP)
(72) Inventor: KUBO, Hiroyuki, Nagaokakyo-shi Kyoto 617-8555 (JP); ITO, Hiromitsu, Nagaokakyo-shi Kyoto 617-8555 (JP); YOSUI, Kuniaki, Nagaokakyo-shi Kyoto 617-8555 (JP)
(74) Representative: Stöckeler, Ferdinand
(86) International application number: PCT/JP2006/320179
(87) International publication number: WO 2007/060792

(57) **Abstract**

Coil units (3A) and (3B) including windings (2A) and (2B), respectively, are disposed on opposite sides across a virtual center line that is perpendicular to a direction of positional displacement of a portable electronic apparatus that is to be brought closer to a reader/writer. The windings (2A) and (2B) are connected in series through a conductor (4) such that winding directions of the windings (1A) and (1B) are the same. A difference in the communication performance between a case where the portable electronic apparatus is brought closer to a central portion of the reader/writer and a case where the portable electronic apparatus is brought closer to a position that is deviated from the central portion of the reader/writer can be reduced. In particular, even in a case where the portable electronic apparatus is brought closer to a peripheral portion of the reader/writer, a predetermined maximum possible communication range can be ensured.

## Description

### Technical Field

The present invention relates to a coil antenna to be provided in a portable electronic apparatus and a portable electronic apparatus including such a coil antenna.

### Background Art

So-called RFID (Radio Frequency IDentification: non-contact data identification technology, radio-wave system recognition) systems using non-contact IC cards or IC tags have been introduced in fields of automatic train-ticket gates, security systems for entering and leaving buildings, or electronic money systems in recent years.

Such an RFID system includes a non-contact IC card, which contains an IC chip and a planar coil to be used for data transmission/reception and data storing, and a reader/writer for writing and reading data to and from the non-contact IC card. Magnetic flux from the reader/writer passes through the planar coil, so that communication between the non-contact IC card and the reader/writer can be achieved.

In recent years, a technology for communication between a cellular phone containing an IC chip, instead of a non-contact IC card in the above-described RFID system, and a reader/writer has become commonplace.

In the case of a cellular phone containing such an IC chip, a coil antenna having a large loop area or a coil antenna formed by winding a coil around a magnetic core is disposed in a casing of the cellular phone. Thus, such a cellular phone is brought closer to an antenna of a reader/writer so that magnetic flux from the antenna of the reader/writer can pass through the coil of the coil antenna.

In the case of a cellular phone or the like containing such a non-contact IC card chip, the planar coil is provided on one of surfaces (in the vicinity of a surface) of the casing of the cellular phone. However, since a circuit board including an earth electrode, a metallic battery case, and the like are provided inside the cellular phone, it is difficult to cause magnetic flux to pass through the planar coil. Thus, there is a problem of not achieving a wider communication range. In addition, for example, in a case where the cellular phone is brought closer to the reader/writer such that the front and back sides of the cellular phone are inverted from what they should be, communication may not be performed at all. Accordingly, there is a problem of variations in sensitivity, depending on the orientation of the cellular phone.

A non-contact IC card (an RFID medium) achieving an object of efficiently receiving necessary electric power, which is one of RFID media of this type, is disclosed in Patent Document 1. The non-contact IC card described in Patent Document 1 includes a communication antenna, which transmits and receives data and signals without contact, and a plurality of receiving coils. In a state in which the receiving coils face feeding coils with gaps therebetween, electromagnetic induction is generated between the receiving coils and the feeding coils. In the case of receiving power, the receiving coils receive power supply from the feeding coils without contact by the electromagnetic induction.

In addition, an RFID medium achieving communication between a reader/writer and the RFID medium even in a case where the RFID medium is disposed in a direction that is perpendicular to a coil antenna of the reader/writer is described in Patent Document 2.

The configuration of a non-contact IC tag disclosed in Patent Document 2 is shown in Fig. 1. In the non-contact IC tag, an IC module 210 to and from which information is externally written and read and a conductive antenna unit 220 for supplying electric power to the IC module 210 using electromagnetic induction from a reader/writer and for performing writing and reading of information to and from the IC module 210 are provided on a base member 250, which is a resin sheet or the like. The antenna unit 220 is connected to the IC module 210 such that two coil antennas 221a and 221b are connected in series so as to form a figure-of-eight shape.
Patent Document 1: Japanese Unexamined Patent Application Publication No. 2000-201442
Patent Document 2: Japanese Unexamined Patent Application Publication No. 2004-126750

### Disclosure of the Invention

### Problems to be Solved by the Invention

However, for such a known RFID medium, in a case where communication is performed for authentication of a user, billing and settlement, or the like by bringing a portable electronic apparatus closer to a reader/writer, the communication performance (communication range) greatly changes, depending on the position of a communication antenna provided in the portable electronic apparatus, that is, depending on whether the communication antenna is brought closer to a central portion of the reader/writer or brought closer to a position deviated from the central portion (position displaced from the central portion) of the reader/writer. This change directly appears as a problem of a reduction in the possible communication range in a case where an RFID medium is brought closer to a peripheral portion of a reader/writer.

In the case of the non-contact IC card described in Patent Document 1, providing a plurality of receiving coils in the RFID medium increases the power reception efficiency. However, since only a single communication antenna coil is provided in the non-contact IC card, a problem of a deterioration in the communication performance in a case where the RFID medium is brought closer to a reader/writer such that the position of the RFID medium is deviated from the reader/writer cannot be solved.

In addition, Patent Document 2 is designed in order to achieve an object of providing a predetermined communication range even in a case where the positional relationship between an RFID medium and a reader/writer is changed from a known direction in which the RFID medium and the reader/writer face each other to a direction in which the RFID medium and the reader/writer are perpendicular to each other. Thus, Patent Document 2 still has a problem of a deterioration in the communication performance in a case where the RFID medium is brought closer to the reader/writer such that the position of the RFID medium is deviated from the reader/writer. Furthermore, since a plurality of antenna coils are connected in series such that the winding directions of the antenna coils are opposite to each other, in a case where magnetic fluxes pass through both coils, induction currents cancel each other, resulting in the occurrence of a problem in which a communication range becomes rather narrower.

An object of the present invention is to provide a coil antenna that reduces a difference in communication performance between a case where a portable electronic apparatus, which includes the coil antenna, is brought closer to a central portion of a reader/writer and a case where the portable electronic apparatus is brought closer to a position deviated from the central portion (displaced from the central portion) of the reader/writer and, in particular, that solves a problem of a reduction in a possible communication range in a case where the portable electronic apparatus is brought closer to a peripheral portion of the reader/writer and to provide a portable electronic apparatus including such a coil antenna.

### Means for Solving the Problems

A coil antenna according to the present invention is characterized in that a plurality of coil units each including a winding are disposed on opposite sides across a virtual center line assumed to be in a long-axis direction or a short-axis direction of main surfaces of a casing of a portable electronic apparatus, the casing having a plate shape and having a first main surface and a second main surface that faces the first main surface, and in that the windings of the plurality of coil units are connected through a conductor such that winding directions of the windings of the plurality of coil units are the same.

Coil axes of the windings of the plurality of coil units may be perpendicular to the main surfaces of the casing.

The conductor may be disposed in a peripheral portion along a side of the casing. Advantages

According to the present invention, since coil units are disposed on opposite sides across a virtual center line of a casing of an electronic apparatus including a coil antenna and windings of the coil units are connected in series through a conductor such that winding directions of the windings of the coil units are the same, even in a case where the position of the portable electronic apparatus that is brought closer to a reader/writer is deviated from a central portion of the reader/writer to a peripheral portion, there is a high probability to achieve strong coupling between at least one of the coil units and an antenna of the reader/writer. Thus, the communication performance is prevented from being suddenly deteriorated, and a wide possible communication range for the reader/writer can be maintained.

In addition, since a conductor for connecting the coil units is disposed in a peripheral portion along a side of the casing, which has a plate shape, of the portable electronic apparatus, the conductor also defines part of the coil antenna, thus increasing the loop area. Consequently, a larger gain is achieved, and a deterioration in the communication performance due to deviation from the central portion of the reader/writer can further be suppressed.

### Brief Description of Drawings

Fig. 1 is an illustration showing an example of a non-contact IC tag of Patent Document 2.
Fig. 2 is an illustration showing the configuration of a coil antenna and a cellular phone including the coil antenna according to a first embodiment.
Fig. 3 is an illustration showing positional deviations of cellular phones with respect to a reader/writer.
Fig. 4 is an illustration showing the configuration of a coil antenna and a cellular phone including the coil antenna according to a second embodiment.
Fig. 5 includes illustrations each showing the configuration of a coil antenna and a cellular phone including the coil antenna according to a third embodiment.
Fig. 6 includes illustrations showing the configuration of a coil antenna according to an embodiment of the present invention.
Fig. 7 illustrates the relationship between the positional deviation of the coil antenna and the maximum possible communication range.

### Reference Numerals

- 1: magnetic core
- 2: winding
- 3: coil unit
- 4: conductor
- 10: RFID substrate
- 11: battery pack
- 12, 13: metal plate
- 14: capacitor
- 20: main casing
- 21: sub-casing
- 30: reader/writer antenna
- 100: coil antenna
- 101: cellular phone

### Best Modes for Carrying Out the Invention

### <<First Embodiment>>

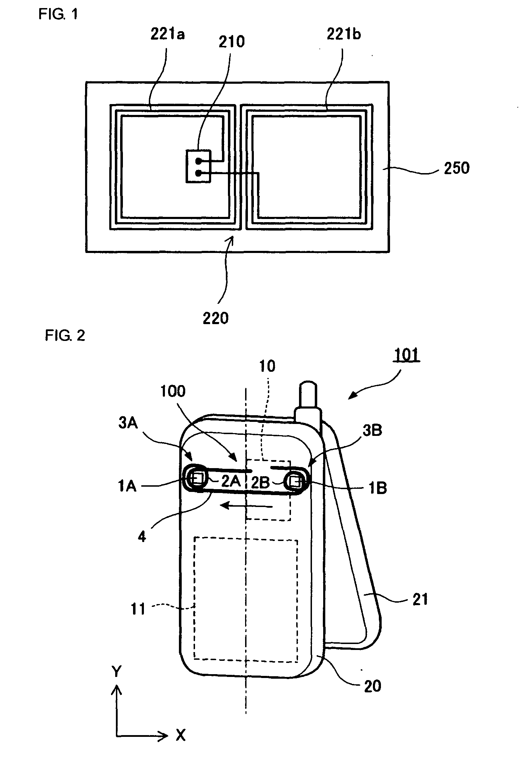

Fig. 2 is an illustration showing the configuration of a cellular phone including a coil antenna according to a first embodiment. The configuration of the cellular phone is illustrated as viewed from a main casing of the cellular phone in a state in which a sub-casing is slightly unfolded with respect to the main casing. However, the internal configuration of the main casing is represented as a perspective view.

Amain casing 20 and a sub-casing 21 each have a plate shape. The main casing 20 and the sub-casing 21 form a so-called clamshell casing that can be folded and unfolded about a side of each of the main casing 20 and the sub-casing 21. The main casing 20 includes a keyboard, and the sub-casing 21 includes a liquid crystal panel.

The main casing 20 contains a coil antenna 100 including two coil units 3A and 3B, an RFID substrate 10, a main-casing substrate, which is not shown, a battery pack 11, and the like.

The coil units 3A and 3B include magnetic cores 1A and 1B, which are made of ferrite, and windings 2A and 2B, which are wound around the magnetic cores 1A and 1B, respectively. In the two coil units 3A and 3B, one ends of the windings are connected to each other through a conductor 4 and the other ends of the windings are connected to the RFID substrate 10. The windings 2A and 2B of the two coil units 3A and 3B are connected in series through the conductor 4 such that winding directions of the windings 2A and 2B are the same. The coil axes of the windings 2A and 2B of the coil units 3A and 3B are perpendicular to a main surface of the main casing 20.

The two coil units 3A and 3B are disposed on opposite sides across a center line (a virtual center line) represented by an alternate long and short dash line of the main casing 20 in the drawing such that the coil units 3A and 3B are placed as far away as possible from the center line.

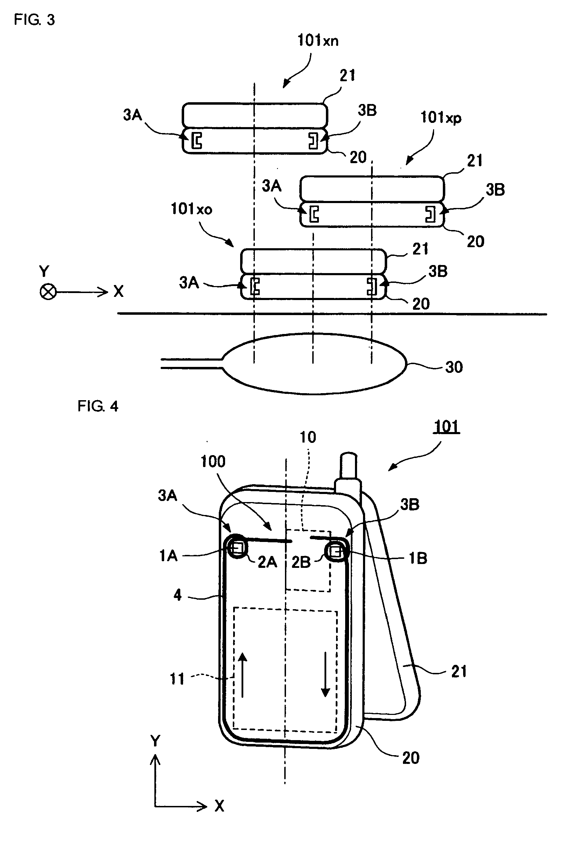

Fig. 3 is an illustration showing examples of deviations of cellular phones with respect to a reader/writer. A cellular phone 101xo represents a state in which a cellular phone is brought closer to a proper position with respect to a reader/writer antenna 30. In this case, the two coil units 3A and 3B achieve substantially equal magnetic-field couplings with the reader/writer antenna 30. A cellular phone 101xp represents a state in which a cellular phone is brought closer to a position that is displaced by a predetermined amount in +X direction from the center of the reader/writer antenna 30. A cellular phone 101×n represents a state in which a cellular phone is brought closer to a position that is displaced by a predetermined amount in -X direction. Although, as a matter of convenience, elevations from a surface of the reader/writer are different among the cellular phones, the actual elevations are the same.

As described above, even in a case where the cellular phone 101 is displaced in the X direction from the reader/writer antenna 30, one of the two coil units 3A and 3B is closer to the central portion of the reader/writer antenna 30 and achieves strong magnetic-field coupling. As a result, the total gain of the coil antenna hardly decreases. That is, in a case where a cellular phone is placed in a position represented by the cellular phone 101xp, although the magnetic-field coupling between the coil unit 3B and the reader/writer antenna 30 is weakened, the magnetic-field coupling between the coil unit 3A and the reader/writer antenna 30 is strengthened. In addition, in a case where a cellular phone is placed in a position represented by the cellular phone 101xn, although the magnetic-field coupling between the coil unit 3A and the reader/writer antenna 30 is weakened, the magnetic-field coupling between the coil unit 3B and the reader/writer antenna 30 is strengthened.

As described above, even in a case where a cellular phone is brought closer to a reader/writer such that the position of the cellular phone is deviated in the orthogonal direction of the center line from the central portion of the reader/writer, one of the two coil units 3A and 3B achieves strong coupling with the antenna of the reader/writer. Thus, the communication performance is prevented from being suddenly deteriorated, and a wide possible communication range for the reader/writer can be maintained.

Although the windings 2A and 2B of the two coil units 3A and 3B are connected in series in the first embodiment, the windings 2A and 2B of the two coil units 3A and 3B may be connected in parallel.

### <<Second Embodiment>>

Fig. 4 is an illustration showing the configuration of a cellular phone including a coil antenna according to a second embodiment. The coil antenna shown in Fig. 4 is different from the coil antenna shown in Fig. 2 in the configuration of the conductor 4 connecting the two coil units 3A and 3B. In the example shown in Fig. 3, the conductor 4 through which one ends of the windings 2A and 2B of the two coil units 3A and 3B are connected to each other is disposed in a peripheral portion along three sides of the main casing 20 outside the battery pack 11.

Since the conductor 4 through which the windings of the two coil units 3A and 3B are connected to each other is disposed in the peripheral portion along the sides of the main casing 20, electromagnetic induction is generated not only by magnetic fluxes passing through the magnetic cores 1A and 1B of the coil units 3A and 3B but also by magnetic fluxes interlinking with the loop surface formed by the conductor 4. Accordingly, the gain of the coil antenna increases. In addition, not only in the case of displacement in the direction (X-axis direction) perpendicular to the center line, which is represented by an alternate long and short dash line shown in the drawing, but also in the case of displacement in the center-line direction (Y-axis direction) along the surface direction of the main casing 20, variations in the gain can be suppressed. Thus, an allowable displacement range can be increased.

### <<Third Embodiment>>

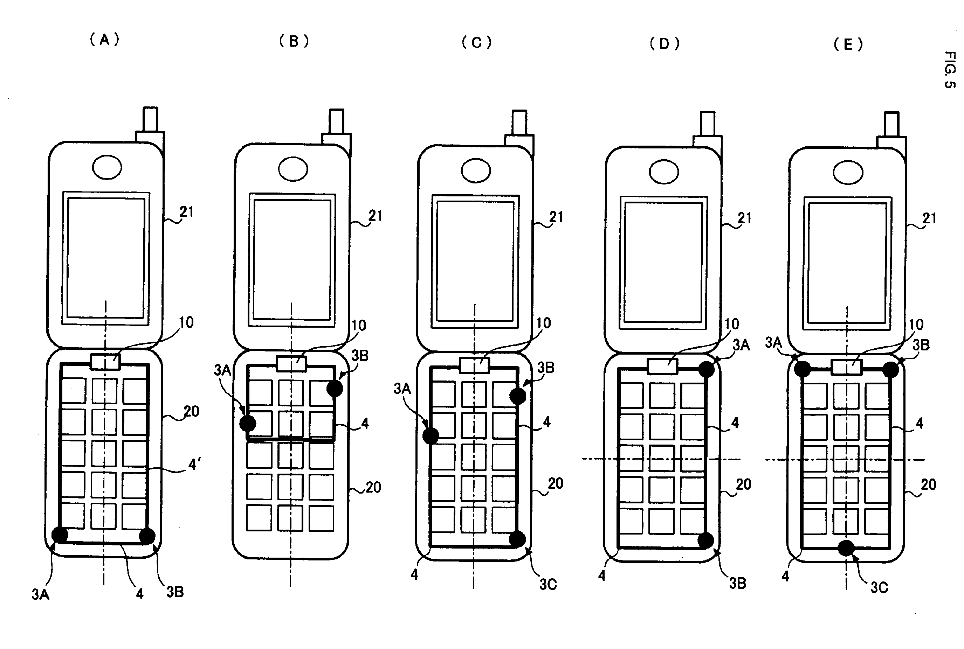

Fig. 5 includes illustrations each showing the configuration of a cellular phone including a coil antenna according to a third embodiment. In the example shown in Fig. 4, the two coil units 3A and 3B are disposed in positions near the RFID substrate 10. However, as shown in part (A) of Fig. 5, the length of the conductor 4 through which one ends of the windings in the two coil units 3A and 3B are connected to each other may be shorter than the length of conductors 4' for connecting the other ends of the windings to the RFID substrate 10.

In the examples shown in Figs. 2 and 4, the two coil units 3A and 3B are disposed in positions that are substantially line-symmetric with respect to the center line, which serves as a symmetric axis. However, as shown in part (B) of Fig. 5, the two coil units 3A and 3B may be disposed in positions asymmetric with respect to the center line, which is represented by an alternate long and short dash line.

In addition, as shown in part (C) of Fig. 5, three coil units 3A, 3B, and 3C may be provided. The number of coil units provided may be four or more. Furthermore, the numbers of coil units provided on opposite sides across a center line represented by an alternate long and short dash line are not necessarily the same.

In each of the examples shown in Fig. 4 and parts (A), (B), and (C) of Fig. 5, the center line (virtual center line) represented by the alternate long and short dash line in the corresponding drawing is assumed to be in the long-axis direction of the main surface of the main casing having a plate shape. However, as represented by an alternate long and short dash line in part (D) of Fig. 5, a virtual center line may be assumed to be in the short-axis direction of the main surface of the main casing. That is, as shown in part (D) of Fig. 5, the coil units 3A and 3B may be provided on opposite sides across the virtual center line in the short-axis direction of the main surface of the main casing.

In addition, similarly, as represented by two alternate long and short dash lines in part (E) of Fig. 5, virtual center lines may be assumed to be in the long-axis direction and the short-axis direction of the main surface of the main casing having a plate shape. That is, as shown in part (E) of Fig. 5, the coil units 3A and 3B may be provided on opposite sides across the virtual center line assumed to be in the long-axis direction and the coil units (3A and 3B) and a coil unit 3C may be provided on opposite sides across the virtual center line assumed to be in the short-axis direction.

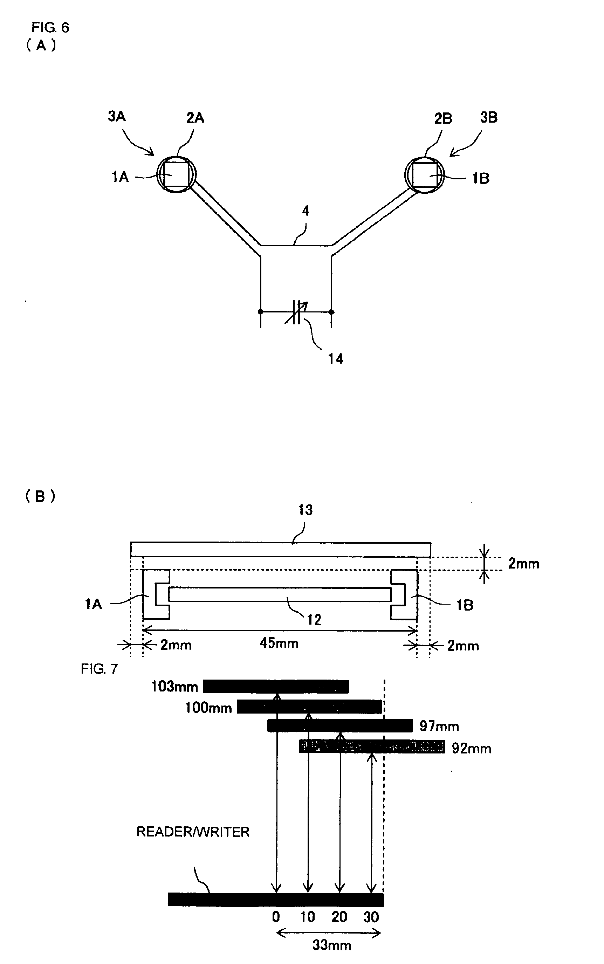

A coil antenna according to an embodiment of the present invention will be described with reference to Fig. 6.

A coil antenna shown in Fig. 6 is prepared in order to quantitatively measure the characteristics of a coil antenna including two coil units. Part (A) of Fig. 6 is a plan view of the coil antenna, and part (B) of Fig. 6 is a sectional view taken in a direction of the thickness of the casing of the coil antenna. The number of turns of each of the windings 2A and 2B of the coil units 3A and 3B is six. A resonant-frequency adjusting capacitor 14 is connected to a series circuit including the two coil units 3A and 3B, which are connected to each other through the conductor 4. The capacitance of the capacitor 14 is adjusted such that the resonant frequency of the coil antenna is 13.56 MHz.

A metal plate 12, which is assumed to be a keyboard substrate within the main casing, is disposed between the magnetic cores 1A and 1B of the two coil units 3A and 3B, respectively. In addition, a metal plate 13, which is assumed to be the frame of a liquid crystal panel of the sub-casing, is disposed in a position that is parallel to the metal plate 12. The positional relationship among the two magnetic cores 1A and 1B and the metal plates 12 and 13 is represented as shown by dimensions provided in the drawing.

Fig. 7 illustrates the relationship between the position of a coil antenna with respect to a reader/writer and the maximum possible communication range. In a case where the center of the read position of the reader/writer (the center of the reader/writer antenna) corresponds to the center of the coil antenna, the maximum possible communication range is 103 mm. In the case of a positional displacement of 30 mm, the maximum possible communication range is 92 mm. The positional displacement of the coil antenna of the cellular phone with respect to the reader/writer is ±33 mm. As described above, the gain is reduced by only about 10% for the maximum displacement of the cellular phone occurring in a normal use state. Thus, the allowable displacement range of a cellular phone that is to be brought closer to a reader/writer can be significantly increased.

## Claims

1. A coil antenna to be provided in a casing of a portable electronic apparatus, the casing having a plate shape and having a first main surface and a second main surface that faces the first main surface, wherein a plurality of coil units each including a winding are disposed on opposite sides across a virtual center line assumed to be in a long-axis direction or a short-axis direction of the main surfaces of the casing, and wherein the windings of the plurality of coil units are connected through a conductor such that winding directions of the windings of the plurality of coil units are the same.

2. The coil antenna according to Claim 1, wherein coil axes of the windings of the plurality of coil units are perpendicular to the main surfaces of the casing.

3. The coil antenna according to Claim 1 or 2, wherein the conductor is disposed in a peripheral portion along a side of the casing.

4. A portable electronic apparatus including the coil antenna according to any one of Claims 1 to 3.
